# EUROPÄISCHE PATENTSCHRIFT

(11) **EP 1 260 114 B1**
(45) Veröffentlichungstag und Bekanntmachung des Hinweises auf die Patenterteilung: **29.09.2004**
(21) Anmeldenummer: 01911347.1
(22) Anmeldetag: 11.01.2001
(51) Int. Cl.: H04Q 7/38

(54) **ORTUNGS- UND MELDESYSTEM INNERHALB EINES ZELLULAREN MOBILFUNKNETZES**
LOCATING AND SIGNALLING SYSTEM WITHIN A CELLULAR MOBILE RADIOTELEPHONE NETWORK
SYSTEME DE LOCALISATION ET D'AVERTISSEMENT UTILISE A L'INTERIEUR D'UN RESEAU DE TELEPHONIE MOBILE CELLULAIRE

(30) Priorität: 03.03.2000 DE 10010143; 14.06.2000 DE 10029137
(43) Veröffentlichungstag der Anmeldung: 27.11.2002
(73) Patentinhaber: Bodyguard Technologies GmbH, 30827 Garbsen/Berenbostel (DE)
(72) Erfinder: KRÜGER, Michael, 30890 Barsinghausen (DE); PETER, Matthias, 31535 Neustadt (DE); VON OHLEN, Jürgen, 37154 Northeim (DE)
(74) Vertreter: Thömen, Uwe, Dipl.-Ing.
(86) Internationale Anmeldenummer: PCT/DE2001/000107
(87) Internationale Veröffentlichungsnummer: WO 2001/065879

(56) Entgegenhaltungen:
- WO-A-96/25830

## Beschreibung

Die Erfindung betrifft ein Ortungs- und Meldesystem innerhalb eines zellularen Mobilfunknetzes nach dem Oberbegriff des Anspruchs 1.

Zur elektronischen Ortung von Personen oder Gegenständen ist das Global Positioning System GPS konzipiert, das auf einer satellitengestützten Ortung von Empfangsgeräten basiert und im Frequenzbereich von ca. 1,5 GHz arbeitet. Neben militärischen Zwecken, für die es ursprünglich entwickelt wurde, dient es inzwischen für Navigationssysteme in zivilen Land-, Wasser- und Luftfahrzeugen.

Zwar ermöglicht dieses System eine besonders genaue Ortung, für Notrufsysteme ist es jedoch nur bedingt geeignet, da es nur bei freier Sichtverbindung zwischen dem terrestrischen Empfänger und den Satelliten einwandfrei funktioniert, während es in bewaldeten Gegenden, in Gebäuden oder in sonstigen umschlossenen Räumen nicht funktioniert, da die Funkstrecke zwischen Sendern und Empfängern stark gedämpft oder gar unterbrochen ist.

Demgegenüber ist eine Funkverbindung zwischen Sendern und Empfängern bei terrestrischen Mobilfunknetzen auch noch in Gebäuden oder geschlossenen Räumen möglich. Darüber hinaus sind auch in frequentierten unterirdischen Bereichen, wie Tunneln oder U-Bahnnetzen Basisstationen für Mobilfunk installiert.

Da das Mobilfunknetz zellular aufgebaut ist, ergibt sich bereits aufgrund der Zuordnung zu einzelnen Zellen eine grobe Ortungsmöglichkeit. Darüber hinaus können auch Empfangsparameter der empfangbaren Feststationen einer Zelle ausgewertet werden und so eine genauere Ortsbestimmung vorgenommen werden.

Aus einer Veröffentlichung der DLR ist es bekannt, für die Ortung im Global System for Mobile Communication GSM den Timing Advance Parameter auszuwerten. Beim GSM-Mobilfunksystem arbeiten nämlich bis zu acht mobile Endgeräte auf derselben Frequenz und vermeiden eine Kollision dadurch, dass sie ihre Aussendungen in unterschiedlichen Zeitschlitzen vornehmen. Das Zeitschema ist dabei so eng gewählt, dass das mobile Endgerät sein Datenpaket vor Beginn des Empfangszeitschlitzes an die Basisstation absenden muss, damit dieses dort innerhalb des Empfangsfensters eintrifft. Der Timing Advance Parameter drückt mittelbar über die Ausbreitungsgeschwindigkeit von Funkwellen die Länge des Weges aus, den die mit Lichtgeschwindigkeit abgestrahlten Funkwellen vom mobilen Endgerät zur Basisstation benötigen und sind unmittelbar ein Maß für die Zeit, um die die Aussendung vorverlegt wird, damit sie im korrekten Zeitschlitz bei der Basisstation eintrifft. Somit können die Timing Advance Parameter als Abstand des mobilen Endgerätes von der zugehörigen Basisstation ausgewertet werden und damit zur Ortsbestimmung herangezogen werden, wenn die Timing Advance Parameter von mehreren Basisstationen bekannt sind.

Die DLR-Studie schlägt zwar vor, dass eine erzwungene Übergabe zu weiteren Basisstationen durchgeführt wird, um deren Timing Advance Parameter zu erhalten. Wie dies in der Praxis gemacht werden soll, bleibt aber offen.

Aus der WO-A-9625830 ist ein Ortungssystem bekannt, mit dem der Standort mobiler Endgeräte in einem Mobilfunknetz bestimmt werden kann. Die Initiative für eine Ortung geht ausschließlich von einem Positionsbestimmer aus, der einer festen Vermittlungsstelle des Mobilfunknetzes zugeordnet ist. Dabei soll die Ortung ohne Wahrnehmung des Benutzers des mobilen Endgerätes erfolgen.

Hierzu wird eine spezielle Kurznachricht in Form einer SMS an das mobile Endgerät übermittelt, die weder auf dem Display des mobilen Endgerätes erscheint, noch vom Benutzer aus einem Speicher abrufbar ist. Diese Kurznachricht veranlasst das mobile Endgerät, nacheinander Verbindungen zu benachbarten Basisstationen aufzubauen und positionsspezifische Parameter zu ermitteln und vorübergehend zu speichern. Nach einem vollständigen Zyklus aller nacheinander aufgebauten Verbindungen werden die vorübergehend gespeicherten positionsspezifischen Parameter als Kurznachricht in Form einer SMS vom mobilen Endgerät zum Positionsbestimmer der Vermittlungsstelle übertragen.

Der Erfindung liegt die Aufgabe zugrunde, ein Ortungs- und Meldesystem zu schaffen, das bei Alarmauslösung durch ein mobiles Endgerät dessen schnelles Orten und Auffinden ermöglicht.

Diese Aufgabe wird bei einem Ortungs- und Meldesystem nach dem Oberbegriff des Anspruchs 1 durch die im Kennzeichen angegebenen Merkmale gelöst.

Weiterbildungen und vorteilhafte Ausgestaltungen der Erfindung ergeben sich aus den Unteransprüchen.

Im normalen aktiven Betrieb zwischen einem mobilen Endgerät und einer Basisstation bleibt eine Funkverbindung zu derselben Basisstation solange erhalten, wie sie gegenüber den anderen Basisstationen bessere Qualitäts-Kriterien erfüllt. Erst wenn die Auswertungen der Empfangsparameter anderer Basisstationen ergeben, dass eine Funkverbindung zu einer anderen Basisstation besser als zu der gegenwärtigen ist, wird eine Übergabe zu der anderen Basisstation veranlasst.

Ein ausführliches Protokoll der Sende- und Empfangsparameter erhält das mobile Endgerät immer nur von der Basisstation, zu der eine aktive Verbindung besteht. Dies ist bei normaler Nutzung des Mobilfunknetzes nur diejenige Basisstation, die die besten Qualitätskriterien für die Funkverbindung erfüllt. Die ausführlichen Sende- und Empfangsparameter der anderen empfangbaren Basisstationen bleiben dagegen unbekannt.

Zur genaueren Ortung werden die Empfangsparameter der Basisstationen gezielt so zu verändern, dass nicht mehr nur die Basisstation mit den besten Qualitäts-Kriterien die Funkverbindung aufrechterhält oder zu sich überleitet, sondern gezielt nacheinander andere Basisstationen ausgewählt werden, mit der zwar in Wirklichkeit nur eine schlechtere Funkverbindung hergestellt werden kann, durch Veränderung der Empfangsparameter aber Kriterien simuliert werden, nach denen eine optimale Funkverbindung hergestellt werden könnte. Dies geschieht zu dem Zweck, daß vom System eine Überleitung auf die vermeintlich besser geeignete Basisstation veranlaßt wird, damit nach und nach die Empfangs- und Sendeparameter sämtlicher empfangbarer Basisstationen gewonnen werden können.

Nachdem dem Mobilfunknetz dann durch Veränderung der Empfangsparameter vorgetäuscht wird, dass die Überleitung zu einer weiteren Basisstation nötig ist, wird vom System auch diese Überleitung herbeigeführt, so dass dann die entsprechenden Sende- und Empfangsparameter ermittelt werden können. Dieser Vorgang wird solange wiederholt, bis die Sende- und Empfangsparameter aller empfangbaren Basisstationen ermittelt sind. Daraus kann dann durch Kreuzpeilung sowie Auswertung der Feldstärken und weiterer Parameter eine genauere Ortsbestimmung vorgenommen werden.

Als Empfangsparameter der benachbarten Basisstationen kann der Base Station Identity Code BSIC beeinflusst werden, indem nur der BSIC der Basisstation beibehalten wird, zu der die Verbindung übergeleitet werden soll, während der BSIC der übrigen empfangbaren Basisstationen zu Null gesetzt wird.

Der BSIC ist ein 6-Bit-Wert, der dazu-dient, benachbarte Basisstationen mit gleicher Frequenz zu unterscheiden. Werden die BSIC-Werte alle bis auf einen verfälscht, oder eindeutig zu Null gesetzt, so dass sie keiner Basisstation zugeordnet werden können, so verbleibt nur eine Basisstation, zu der noch eine Verbindung aufgebaut-werden kann. Es ist also nicht mehr nötig, noch auf andere Werte zu achten, die bei der Auswahl verschiedener empfangbarer Basisstationen berücksichtigt werden können. Vielmehr bleibt nur die eine Basisstation als noch mögliche Alternative erhalten. Dadurch kann ohne weitere sonstige Vergleichsrechenoperationen gezielt die Übergabe zu der ausgewählten Basisstation vorgenommen werden.

Ferner ist vorgesehen, dass vor Aufbau einer Verbindung in einem als Idle Modus bezeichneten Zustand, in dem das mobile Endgerät keine aktive Verbindung zum Netz hat, Empfangsparameter der empfangbaren Basisstationen ausgewertet und zwischengespeichert werden. Nach Aufbau der Verbindung, dem Dedicated Modus, werden die im Idle Modus ermittelten Empfangsparameter oder deren Auswertungsergebnis für eine grobe Ortsbestimmung vorab als Kurznachricht über den Short Message Service SMS oder in codierter Form über den Sprachkanal zu einer Notrufzentrale übermittelt. Anschließend wird die genauere Ortsbestimmung über die Timing Advance TA Parameter vorgenommen und ebenfalls als Kurznachricht über den Short Message Service SMS oder in codierter Form über den Sprachkanal zu einer Notrufzentrale übermittelt.

Diese Maßnahme bedeutet einen großen Zeitgewinn bei der Übermittlung der Ortsbestimmung und darüber hinaus auch eine Redundanz- oder Plausibilitätskontrolle. Da im Idle Modus stets die eingeschränkten Empfangsparameter der empfangbaren Basisstationen ermittelt werden, liegen deren Ergebnisse stets in aktueller Form vor. Bei Auslösen eines Alarms können somit diese Werte sofort nach einem aktiven Verbindungsaufbau zu einer Notrufzentrale übermittelt werden. Zumindest eine zuständige Einsatzleitstelle kann vorab ermittelt werden. Darüber hinaus können können auch bereits Notdienste und Einsatzkräfte ohne Zeitverzögerung in Richtung des Einsatzortes starten.

Im Anschluss an diese grobe Ortsbestimmung wird dann eine genauere Ortsbestimmung vorgenommen, indem nacheinander durch erzwungene Übergabe von einer zur anderen Basisstation die genaueren Sende- und Empfangsparameter ermittelt werden. Dieser Vorgang benötigt eine gewisse Zeit, und daher sind diese Informationen nicht bereits bei Auslösung eines Alarms vorhanden. Eine ständige Durchführung dieser Maßnahmen würde nämlich zu einer erheblichen Netzbelastung führen, die nicht akzeptabel ist. Dennoch bedeutet die Zeitverzögerung in der Praxis keinen Nachteil, da ja durch die grobe Ortsbestimmung vorab schon ungefähr die Zielrichtung des Notfalleinsatzes bekannt ist und die Rettungskräfte sich in der richtigen Richtung auf dem Weg befinden. Die nunmehr genauere Ortsbestimmung ermöglicht dann noch eine Feinkorrektur des Einsatzortes.

Die im Idle Modus ermittelten Empfangsparameter oder deren Auswertungsergebnis können für eine grobe Ortsbestimmung als Dual Tone Multi Frequency DTMF Code im Sprachkanal übertragen werden und die im aktiven Modus ermittelten Empfangsparameter oder deren Auswertungsergebnis für eine genauere Ortsbestimmung zuerst über den Short Message Service SMS übertragen werden. Erst bei Versagen dieser Übertragungsart wird eine Ersatzübertragung von der Notrufzentrale angefordert und die Daten für eine genauere Ortsbestimmung dann ebenfalls als Dual Tone Multi Frequency DTMF Code im Sprachkanal übertragen werden.

Diese Maßnahme schafft eine Optimierung der Übertragungegeschwindigkeit, denn die Daten für die grobe Ortsbestimmung umfassen ein geringeres Volumen als die für eine genauere Ortsbestimmung und erlauben deshalb ohne Nachteile die Übertragung im langsameren DTMF Betrieb. Sie lassen sich unmittelbar nach Empfang über den Sprachkanal auswerten und nehmen nicht wie die SMS-Signale einen Umweg über eine SMS-Stelle des Netzbetreibers.

Demgegenüber ist das Informationsvolumen für eine genauere Ortsbestimmung wesentlich größer, so dass hier trotz der Verzögerung durch die SMS-Stelle eine Übertragung als SMS schneller ist und darüber hinaus den Vorteil besitzt, dass sie parallel zur Sprachübertragung ohne Beeinflussung des Sprachkanals möglich ist. Dadurch bleibt eine eventuelle Durchschaltung akustischer Informationen unbeeinträchtigt.

Allerdings kann es wegen einer möglichen Überlastung der SMS-Stelle oder bei Mobilfunknetzen, die eine SMS-Übermittlung nicht vorsehen, zu einem Versagen dieser Übertragungsart kommen. In diesem Fall ist unter Inkaufnahme einer Verzögerung vorgesehen, dass die umfangreicheren Daten der genaueren Ortsbestimmung ebenfalls als DTMF Signale im Sprachkanal übertragen werden, um überhaupt diese Informationen erhalten zu können.

Es kann vorgesehen sein, dass die genauere Ortsbestimmung in zeitlichen Abständen oder bei Ermittlung einer örtlichen Veränderung oder durch Fernauslösung wiederholt wird und zur Notrufzentrale übertragen wird.

Damit wird beabsichtigt, dass bei bewegten mobilen Endgeräten z. B. bei einer Entführung einer Person oder bei einem Diebstahl eines Gegenstandes wiederholt der aktuelle Aufenthaltsort ermittelt werden kann, um eine Verfolgung zu ermöglichen. Außerdem kann dies auch als Kriterium ausgewertet werden, ob eine zu schützende Person sich mit geringer Geschwindigkeit zu Fuß oder per Fahrrad fortbewegt oder aber in einem Kraftfahrzeug transportiert wird, was auf eine ungewöhnliche Situation, beispielsweise eine Entführung, hindeuten kann.

Weiterhin ist vorgesehen, dass das mobile Endgerät einen fernauslösbaren Alarmgeber umfasst, der ein akustisches und/oder hochfrequentes Signal abstrahlt, das aus der Nähe lokalisierbar ist.

Da eine Ortsbestimmung mittels eines zellularen Mobilfunknetzes selbst bei Auswertung aller Sende- und Empfangsparameter keine metergenaue Ortsbestimmung zulässt, kann es im unwegsamen Gelände oder in Gebäuden zweckmäßig sein, das mobile Endgerät noch durch ein zusätzliches lokales Kriterium ermitteln zu können. Dies kann ein akustisches Signal sein, das von den Rettungskräften ohne Hilfsmittel geortet werden kann oder auch ein hochfrequentes Signal, das mit entsprechenden Peilempfängern aufgenommen werden kann und so eine lokale Ermittlung ermöglicht.

Weiterhin ist vorgesehen, dass der Alarmgeber über das Mobilfunknetz und/oder über einen gesonderten mobilen Empfänger des mobilen Endgerätes von einem Fernauslöser über einen vom Mobilfunknetz unabhängigen Hochfrequenzkanal aktivierbar ist.

Aus taktischen Gründen oder auch zum Zwecke eines schonenden Umgangs mit den Energiereserven des mobilen Endgerätes kann es zweckmäßig sein, das akustische oder hochfrequente Signal für eine Lokalisierung nicht ständig abzustrahlen, sondern nur auf Anforderung. Dies kann dann entweder durch das Mobilfunknetz erfolgen oder durch einen gesonderten Sender, der beispielsweise auf einer für Fernsteuerzwecke zugelassenen Frequenz arbeiten kann.

Nachfolgend wird die Erfindung anhand eines Ausführungsbeispiels erläutert, das in der Zeichnung dargestellt ist.

In der Zeichnung zeigen:
- Fig. 1: ein Grundschema einer Ortung im GSM-Netz,
- Fig. 2: ein Grundschema einer erzwungenen Übergabe von einer Basisstation zur anderen und
- Fig. 3: eine schematische Darstellung eines Ortungs- und Meldesystems für Notfälle.

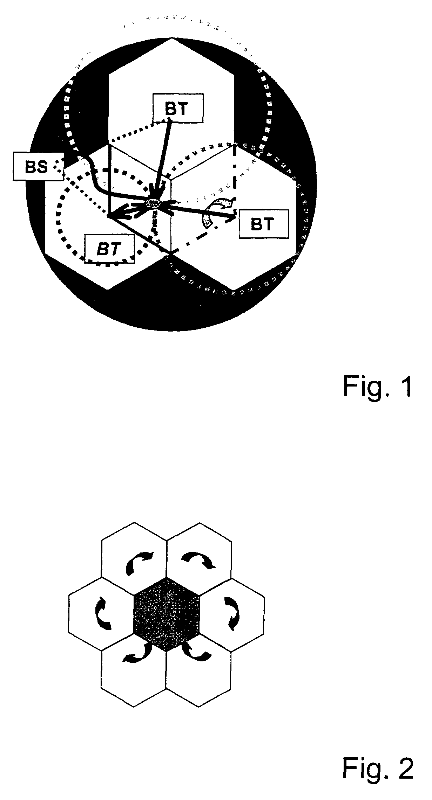

Fig. 1 zeigt ein Grundschema einer Ortung im GSM-Netz. Als wesentlicher Parameter wird hier der Timing Advance TA Parameter ausgewertet. Dieser Wert drückt indirekt die Länge des Weges aus, den die Funkwellen vom mobilen Endgerät zur Basisstation nehmen. Nach dem GSM-Standard arbeiten bis zu acht mobile Endgeräte auf derselben Frequenz und eine Trennung ihrer Aussendungen erfolgt dadurch, daß sie in unterschiedlichen Zeitschlitzen erfolgen. Das Zeitschema ist sehr eng gewählt und das mobile Endgerät muß deshalb sein Datenpaket vor Beginn des Empfangszeitschlitzes der Basisstation abgesandt haben, damit es dort innerhalb des Empfangsfensters eintrifft.

Der Timing Advance Parameter gibt die Zeit an, um die die Aussendung des mobilen Endgerätes vorverlegt werden muß, damit sie im korrekten Zeitschlitz bei der Basisstation eintrifft. Dieser Wert wird von der Basisstation ermittelt und dem mobilen Endgerät vorgegeben. Es ist deshalb eine aktive Verbindung zwischen dem mobilen Endgerät und der Basisstation nötig. Jeder Quantisierungsschritt des zwischen 0 und 63 variablen Timing Advance Parameter entspricht bei reflektionsfreiem Übertragungsweg einem ungefähren Entfernungsabschnitt von 550 m zur Basisstation.

Durch die Ermittlung der Timing Advance Parameter von mehreren umliegenden Basisstationen kann über eine Kreuzpeilung ein Flächenbereich definiert werden, in dem sich das mobile Endgerät mit hoher Wahrscheinlichkeit befindet. Dabei ist natürlich vorausgesetzt, daß die exakte geographische Position der Standorte der Basisstationen dem System bekannt sind. Um die Genauigkeit zu erhöhen, können zusätzliche Basisstationen mit in die Ortsbestimmung einbezogen werden. Darüber hinaus lassen sich auch Parameter wie die Abstrahlungsleistung der Basisstationen in Verbindung mit der Antennenausrichtung und der Empfangsfeldstärke am mobilen Endgerät auswerten. All diese Parameter ermöglichen in einer kombinierten Auswertung eine Toleranz bei der Ortung zwischen 50 und 100 m.

Fig. 2 zeigt ein Grundschema für eine erzwungene Übergabe von einer Basisstation zur anderen. In der Zeichnung sind die Zelle, in der sich das mobile Endgerät befindet, sowie die benachbarten Zellen als sechseckförmige Waben gleicher Größe dargestellt. In der Praxis variieren sie allerdings. Nach dem GSM-Standard kann das mobile Endgerät bei aktiver Verbindung mit einer Basisstation die Informationen von weiteren sechs benachbarten Zellen oder Basisstationen empfangen, um sich bei Verschlechterung der Empfangsbedingungen in eine der sechs benachbarten Zellen einzubuchen. Dabei wird unter anderem die Empfangsfeldstärke und die Bitfehlerrate als Kriterium verwendet und die Übergabe erfolgt automatisch zu derjenigen Basisstation, die unter Berücksichtigung dieser Kriterien die beste Übertragungsqualität erwarten läßt.

Um nun die Timing Advance Parameter aller umliegenden Basisstationen zu erhalten, wofür eine aktive Verbindung benötigt wird, muß im Rahmen der Erfindung eine Änderung der automatischen Übergabe vorgenommen werden. Dies geschieht dadurch, daß die Empfangsparameter der Basisstationen manipuliert werden, so daß sie nicht mehr den tatsächlichen Verhältnissen entsprechen. Die Manipulation kann in der Weise vorgenommen werden, daß nacheinander den Empfangsparameter derjenigen Basisstation, zu der die Verbindung übergeben werden soll, besonders gute Werte zugeordnet werden, und/oder den Empfangsparameter der übrigen Basisstationen besonders schlechte Werte zugeordnet werden. Erfindungsgemäß wird diese Maßnahme dadurch vereinfacht, daß der Base Station Identity Code, der dazu dient, benachbarte Basisstationen gleicher Frequenz zu unterscheiden, verändert wird. Dabei wird der BSIC Wert der unerwünschten Basisstationen zu Null gesetzt und nur der BSIC Wert der gewünschten Basisstation, zu der also die Übergabe erfolgen soll, unverändert belassen. Dem System wird damit vorgetäuscht, daß nur eine Basisstation vorhanden ist, zu der dann zwangsläufig die Verbindung übertragen werden muß, während die übrigen Basisstationen scheinbar nicht mehr existieren. Da bei dieser Maßnahme keine Wahlmöglichkeit einer anderen Basisstation mehr besteht, tritt auch keine Verzögerung durch irgendwelche Rechenoperationen ein, sondern die Übergabe erfolgt sofort. Die Zeit, in der auf diese Weise alle weiteren sechs Basisstationen nacheinander gerufen werden, wird dadurch minimiert.

Im übrigen wird aber die Automatik des GSM-Systems ausgenutzt, um die Übergabe zu veranlassen. Dies hat den Vorteil, daß beispielsweise eine Informationsübertragung durch einen Sprachkanal oder durch einen SMS-Kanal ohne Unterbrechung aufrecht erhalten werden kann.

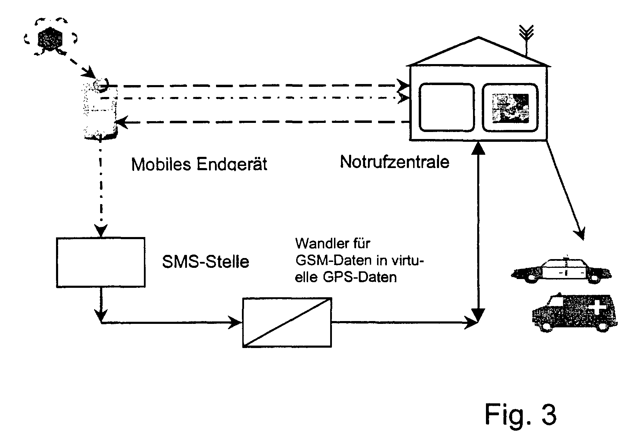

Fig. 3 zeigt eine schematische Darstellung eines Ortungs- und Meldesystems für Notfälle. Es sei hier der Fall angenommen, dass eine Person ein mobiles Endgerät trägt und einen Notruf auslösen möchte, damit ihr Polizei oder Rettungsdienst zu Hilfe kommt. Das mobile Endgerät ermittelt ständig im Idle Modus ohne aktive Verbindung zur Basisstation die Frequenzen aller umliegenden theoretisch einbuchbaren Zellen zusammen mit der Sendeleistung und Empfangsfeldstärke sowie der Zellenidentifikation der eingebuchten Zelle mit Frequenz, Feldstärke und BSIC Wert. Diese Daten werden komprimiert und in einem Speicher des mobilen Endgerätes abgelegt.

Im Alarmfall, der z. B. durch einen Notschalter aber auch durch Sensoren oder durch Überwachung des Standortes über den Idle Modus ausgelöst werden kann, wählt das mobile Endgerät die Nummer einer Notrufzentrale an. Dabei wird ein Sprachkanal geöffnet. Nachdem der Anruf von der Notrufzentrale angenommen wurde, wird über den Sprachkanal ein DTMF Signal mit dem komprimierten Idle Modus Bericht, ergänzt um den dann verfügbaren Timing Advance Wert der aktuellen Basisstation übermittelt. Damit kann bereits nach einer entsprechenden Dekodierung eine relativ genaue Positionierung mit einer Toleranz zwischen etwa 500 und 1000 Meter erfolgen, so dass wenigstens die zuständige Rettungsleitstelle ermittelt werden kann und eventuell sogar Einsatzkräfte in Richtung des Gebietes, in dem der Notfall aufgetreten ist, starten können.

Der Idle Modus-Bericht enthält etwa 40-45 Zeichen, die als DTMF Signal innerhalb von 4-5 Sekunden über den bestehenden Sprachkanal übermittelt werden. Der Sprachkanal bleibt anschließend für ca. drei Minuten offen und ermöglicht dem Operator in der Notrufzentrale, sich einen Eindruck über die Notsituation zu verschaffen, z. B. über die Art und die Ernsthaftigkeit des Notrufs.

Durch das mobile Endgerät wird nun in vorbeschriebener Weise eine erzwungene Übergabe zu den entsprechenden Basisstationen vorgenommen. Der bei jeder aktiven Verbindung mit einer Basisstation ermittelte Dedicated Modus Bericht enthält zusätzlich den jeweiligen Timing Advance Parameter der Basisstation sowie Angaben über die Sendeleistung und die Empfangsfeldstärke der eingebuchten Zelle. Auch diese Daten werden gespeichert, komprimiert und ebenfalls zur Notrufzentrale übermittelt. Wegen des größeren Datenvolumens erfolgt hier die Übertragung vorzugsweise per SMS, da eine SMS parallel zum Sprachkanal versendet werden kann. Während der Umbuchzeit bleibt der Sprachkanal kontinuierlich geöffnet.

Nach Eingang der SMS mit den Dedicated Modus Berichten wird dieser wieder in einem Rechner der Notrufzentrale oder einem separaten Unternehmen mit sicherheitstechnischen Aufgaben dekomprimiert, zerlegt und durchläuft danach ein Auswerteprogramm, in welchem durch geeignete Algorithmen die Zelldaten ausgewertet werden. Die Auswertung erfolgt auf der Basis einer hinterlegten Datenbank, die die geografischen und technischen Daten aller Basisstationen des jeweiligen Netzbetreibers enthält. So wird eine virtuelle GPS-Position ermittelt und auf einem Einsatzrechner in der Notrufzentrale in einer Karte dargestellt. Diese Karte wird anschließend mit einem Alarmplan verknüpft, welcher die Angaben über die hilfsbedürftige Person usw. umfasst, an die zuständige Rettungsleitstelle übermittelt.

Sollte binnen drei Minuten wegen Überlastung der SMS-Stelle keine SMS mit dem Dedicated Modus Bericht eingehen, so wird der im mobilen Endgerät gespeicherte Dedicated Modus Bericht ebenfalls per DTMF Signal übermittelt und dann dekodiert und umgerechnet bzw. verarbeitet. Dieser Vorgang dauert zwar länger als eine SMS-Übertragung, es wird so aber sichergestellt, dass die relevanten Daten, wenn auch mit Verspätung, verfügbar werden.

Das mobile Endgerät kann außerdem ein Nahortungssystem umfassen, das einen Transceiver umfasst, der mit einer Paging-Funktion ausgestattet ist. Das bedeutet, dass im Notfall diese Paging-Funktion für einen Universalgeber, mit dem die Rettungskräfte ausgerüstet werden, empfänglich ist. Statt dessen kann natürlich auch das Mobilfunknetz genutzt werden, indem bei bekannter Teilnehmernummer des den Notruf absetzenden mobilen Endgerätes dieses angewählt und per DTMF Signal oder per SMS die Paging-Funktion aktiviert wird. So kann beispielsweise nach der Ortung einer Person in einem Haus per Paging-Funktion ein akustischer Signalgeber im mobilen Endgerät von den Rettungskräften angesprochen werden, so dass auch etwa hilflose Personen in Wohnungen, hinter verschlossenen Türen, im Unterholz von Parkanlagen usw. eindeutig akustisch oder durch Peilung eines Hochfrequenzsignals nahgeortet werden. Die Deaktivierung des Notrufmodus erfolgt zum Schutz gegen Manipulationen nur durch die Notrufzentrale. Dies kann entweder durch einen DTMF codierten Sprachruf oder aber durch eine entsprechende SMS geschehen.

Das Auslösen des Notrufs bzw. der Ortungsvorgang kann auch durch einen an der Basisstation per DTMF Signal oder SMS übermittelten Code aktiv ausgelöst werden, um so - beispielsweise wenn ein Kind vermisst wird - auch per Fernsteuerung gezielt eine aktive Ortung einzuleiten. So kann auch ein periodischer Wert eingestellt werden, der ein automatisches Ortungsintervall sicherstellt, z. B. bei einem Fahrzeug mit Geißeln oder entführten Personen an Bord.

Weiterhin kann vorgesehen sein, dass verschiedene Alarm-Moden eingestellt werden können. Dabei.kommt ein Geh-, Lauf oder Radfahr-Modus und ein Kraftfahrzeug-Modus in Frage. So wird ständig im 60-Sekunden Intervall die Empfangsfeldstärke der eingebuchten Basisstation sowie die im Idel Modus verfügbaren Parameter der übrigen empfangbaren Stationen abgefragt und mit den vorherigen Datenmustern verglichen. Sollte innerhalb eines üblichen Hysteresefensters eine Abweichung festgestellt werden, so werden innerhalb von jeweils etwa zehn Sekunden in vorbeschriebener Weise eine Verbindung mit der jeweils zuständigen Basisstation und Übergaben mit benachbarten Basisstationen durchgeführt, um die Timing Advance Parameter zu gewinnen und die so ermittelten genaueren Standorte miteinander zu vergleichen.

Dadurch kann festgestellt werden, ob sich das mobile Endgerät fortbewegt und dies mit einer Geschwindigkeit von mehr als 30 km/h geschieht. Bei einem angenommenen Geh-, Lauf oder Radfahr-Modus bedeutet dies eine Unregelmäßigkeit, z. B. dass die betreffende Person mit dem mobilen Endgerät unfreiwillig in einem Kraftfahrzeug transportiert wird. Bei einer Absicherung von Baumaschinen kann auch eine geringere Geschwindigkeit als 30 km/h bereits auf einen Diebstahl hindeuten.

## Patentansprüche

1. Ortungs- und Meldesystem innerhalb eines zellularen Mobilfunknetzes, insbesondere des Global System for Mobile Comminication GSM, bei dem von einem mobilen Endgerät eine Verbindung zu einer Basisstation aufgebaut wird und zusätzlich wenigstens zwei Übergaben zu benachbarten Basisstationen erzwungen werden und aus den von den Basisstationen mit bekannten geografischen Koordinaten ermittelten und zum mobilen Endgerät übertragenen Parametern für einen zeitlichen Versatz Timing Advance TA der Übertragung vom mobilen Endgerät zur Basisstation die Koordinaten eines Flächenbereichs für den wahrscheinlichen Aufenthalt des mobilen Endgerätes bestimmt werden, **dadurch gekennzeichnet, dass**
a) vor Aufbau einer Verbindung in einem als Idle Modus bezeichneten Zustand, in dem das mobile Endgerät keine aktive Verbindung zum Netz hat, Empfangsparameter der empfangbaren Basisstationen ausgewertet und zwischengespeichert werden,
b) bei Alarmauslösung durch das mobile Endgerät eine Verbindung zu einer Notrufzentrale aufgebaut wird und nach einem ersten Aufbau der Verbindung, dem Dedicated Modus, die im Idle Modus ermittelten Empfangsparameter oder deren Auswertungsergebnis für eine grobe Ortsbestimmung vorab als Kurznachricht über den Short Message Service SMS oder in kodierter Form über den Sprachkanal zu der Notrufzentrale übermittelt werden,
c) danach die genauere Ortsbestimmung über die Timing Advance TA Parameter vorgenommen und ebenfalls als Kurznachricht über den Short Message Service SMS oder in kodierter Form über den Sprachkanal zu der Notrufzentrale übermittelt werden,
d) anschließend Übergaben zu benachbarten Basisstationen erzwungen werden und dabei jeweils die genaue Ortsbestimmung zu diesen weiteren Basisstationen über die Timing Advance TA Parameter vorgenommen und ebenfalls als Kurznachricht über den Short Message Service SMS oder in kodierter Form über den Sprachkanal zu der Notrufzentrale übermittelt werden.

2. Ortungs- und Meldesystem nach Anspruch 1, **dadurch gekennzeichnet, dass** die im Idle Modus ermittelten Empfangsparameter oder deren Auswertungsergebnis für eine grobe Ortsbestimmung als Dual Tone Multi Frequency DTMF Code im Sprachkanal übertragen werden und die im aktiven Modus ermittelten Empfangsparameter oder deren Auswertungsergebnis für eine genauere Ortsbestimmung zuerst über den Short Message Service SMS übertragen werden und bei Versagen dieser Übertragungsart eine Ersatzübertragung von der Notrufzentrale angefordert wird und die Daten für eine genauere Ortsbestimmung dann ebenfalls als Dual Tone Multi Frequency DTMF Code im Sprachkanal übertragen werden.

3. Ortungs- und Meldesystem'nach Anspruche 1 oder 2, **dadurch gekennzeichnet, dass** die genauere Ortsbestimmung in zeitlichen Abständen oder bei Ermittlung einer örtlichen Veränderung oder durch Fernauslösung wiederholt wird und zur Notrufzentrale übertragen wird.

4. Ortungs- und Meldesystem nach einem der Ansprüche 1 bis 3, **dadurch gekennzeichnet, dass** das mobile Endgerät einen fernauslösbaren Alarmgeber umfasst, der ein akustisches und/oder hochfrequentes Signal abstrahlt, das aus der Nähe lokalisierbar ist.

5. Ortungs- und Meldesystem nach Anspruch 4, **dadurch gekennzeichnet, dass** der Alarmgeber über das Mobilfunknetz und/oder über einen gesonderten Empfänger des mobilen Endgerätes von einem Fernauslöser über einen vom Mobilfunknetz unabhängigen Hochfrequenzkanal aktivierbar ist.

## Claims

1. Locating and signalling system within a cellular mobile telephone network, particularly the Global System for Mobile Communication or GSM, in which a mobile terminal sets up a communication to a base station and additionally at least two transfers to neighbouring base stations are forced and from the parameters for a Timing Advance TA of the transmission from the mobile terminal to the base station determined by the base stations using known geographical coordinates and transmitted to the mobile terminal, area coordinates for the probable location of the mobile terminal are determined, **characterized in that**
a) prior to the setting up of a communication and in a state known as the idle mode, where the mobile terminal has no active communication to the network, reception parameters of the receivable base stations are evaluated and buffered,
b) on an alarm being triggered by the mobile terminal a communication to an emergency call exchange is set up and following a first setting.up of the communication, the dedicated mode, the reception parameters determined in the idle mode or the evaluation result thereof are communicated beforehand as a short message for approximate positioning by means of the Short Message Service or SMS or in coded form by means of the speech channel to the emergency call exchange,
c) this is followed by a more precise positioning by means of the Timing Advance TA parameters and also the communication in the form of a short message by means of the Short Message Service SMS or in coded form via the speech channel to the emergency call exchange,
d) subsequent transfers to neighbouring base stations are forced and in each case the precise positioning with respect to said further base stations is carried out by means of the Timing Advance TA parameters and is also communicated as a short message using the Short Message Service SMS or in coded form via the speech channel to the emergency call exchange.

2. Locating and signalling system according to claim 1, **characterized in that** the reception parameters determined in the idle mode or their evaluation result is transmitted in the speech channel for an approximate positioning in the form of a Dual Tone Multi Frequency or DTMF code and the reception parameters determined in the active mode or their evaluation result are firstly transmitted by means of the Short Message Service SMS for a more precise positioning and in the case of a failure of this transmission mode a reserve transmission is requested by the emergency call exchange and the data for a more precise positioning are then also transmitted in the speech channel as a Dual Tone Multi Frequency DTMF code.

3. Locating and signalling system according to claim 1 or 2, **characterized in that** the more precise positioning is repeated at time intervals or on determining a local change or through remote release and is transmitted to the emergency call exchange.

4. Locating and signalling system according to one of the claims 1 to 3, **characterized in that** the mobile terminal comprises a remotely activatable alarm generator, which emits an acoustic and/or high frequency signal, which can be located from the near vicinity.

5. Locating and signalling system according to claim 4, **characterized in that** the alarm generator can be activated by means of the mobile radio telephone network and/or by means of a separate receiver of the mobile terminal by a remote release means and a high frequency channel independent of the mobile radio telephone network.

## Revendications

1. Système de recherche et d'avertissement à l'intérieur d'un réseau mobile cellulaire, en particulier du « Global System for Mobile Communication GSM » (système mondial de communication mobile), suivant lequel une connexion est établie depuis un terminal mobile vers une base et deux transferts supplémentaires au moins sont forcés vers des bases voisines et à partir des paramètres déterminés par les bases au moyen de coordonnées géographiques connues et transmises au terminal mobile pour un départ temporel ou « Timing Advance TA » de la transmission du terminal mobile vers la base, sont déterminées les coordonnées d'une zone de surface, dans laquelle le terminal mobile est probablement présent, **caractérisé en ce que**
a) préalablement à l'établissement d'une connexion dans un état appelé « Idle Modus » (mode à vide), dans lequel le terminal mobile n'est pas en connexion active avec le réseau, les paramètres de réception des bases pouvant être réceptionnées sont évalués et stockés dans une mémoire intermédiaire,
b) à déclenchement d'une alarme par le terminal mobile est établie une connexion vers une centrale d'appels d'urgence et qu'après un premier établissement de la connexion, à savoir du « Dedicated Modus » (mode attribué), les paramètres de réception déterminés dans le mode à vide ou leur résultat d'évaluation sont transmis dans un premier temps, pour une recherche grossière, comme message court par l'intermédiaire du « Short Message Service SMS » (Service de messages courts) ou sous forme codée par la voie de conversation vers la centrale d'appels d'urgence,
c) la recherche précise est effectuée ensuite au moyen des paramètres de départ temporel ou « Timing Advance TA » et transmise également comme message court au moyen du « Short Message Service SMS » (Service de messages courts) ou sous forme codée par la voie de conversation vers la centrale d'appels d'urgence,
d) des transferts vers des bases voisines sont forcés ensuite, la recherche précise respective vers ces autres bases ayant lieu par l'intermédiaire des paramètres de départ temporel ou « Timing Advance TA » et étant transmise également comme message court par le « Short Message Service SMS » (Service de messages courts) ou sous forme codée par la voie de conversation vers la centrale d'appels d'urgence.

2. Système de recherche et d'avertissement suivant la revendication 1, **caractérisé en ce que** les paramètres de réception déterminés dans le mode à vide ou leur résultat d'évaluation sont transmis pour une recherche grossière comme « Dual Tone Multi Frequency DTMF Code » (procédé de signalisation multifréquence) dans la voie de conversation et que les paramètres de réception déterminés en mode actif ou leur résultat d'évaluation sont transmis pour une recherche plus précise, d'abord par le « Short Message Service SMS » (service de messages courts) et en cas de défaillance de ce type de transmission, une transmission de remplacement est demandée à la centrale d'appels d'urgence et **en ce que** les données pour une recherche plus précise sont également transmises comme « Dual Tone Multi Frequency DTMF Code » (procédé de signalisation multifréquence) dans la voie de conversation.

3. Système de recherche et d'avertissement suivant la revendication 1 ou 2, **caractérisé en ce que** la recherche plus précise est répétée dans des intervalles de temps réguliers ou en cas de détermination d'un changement local ou par déclenchement à distance et transmise à la centrale d'appels d'urgence.

4. Système de recherche et d'avertissement suivant une des revendications 1 à 3, **caractérisé en ce que** le terminal mobile comprend une alarme, qui émet un signal acoustique et/ou à haute fréquence pouvant être localisé à proximité.

5. Système de recherche et d'avertissement suivant la revendication 4, **caractérisé en ce que** l'alarme peut être activée par l'intermédiaire du réseau mobile et/ou d'un récepteur séparé du terminal mobile, par un déclencheur à distance sur un canal H.F. indépendant du réseau mobile.
